Europäisches Patentamt

**European Patent Office**

**Office européen des brevets**

(11) Numéro de publication: **0 115 730**
**A1**

## (12) DEMANDE DE BREVET EUROPEEN

(21) Numéro de dépôt: **83402521.5**

(22) Date de dépôt: **23.12.83**

(51) Int. Cl.³: **E 04 F 13/08**

(30) Priorité: **20.01.83 FR 8300826**

(43) Date de publication de la demande: **15.08.84**
**Bulletin 84/33**

(84) Etats contractants désignés: **BE DE GB IT**

(71) Demandeur: **Société des Maisons PHENIX Société anonyme dite:, 5-7 avenue Percier, F-75382 Paris Cedex 08 (FR)**

(72) Inventeur: **Tardif, Jean, 12 Résidence les Cottages, F-78810 Feucherolles (FR)**

(74) Mandataire: **Dupuy, René Gaston et al, Cabinet René G. Dupuy & Jean M.L. Loyer 14, Rue La Fayette, F-75009 Paris (FR)**

(54) **Moyens et procédé anti-fissuration du parement d'une maison industrialisée.**

㊻ Ces moyens résident à placer une plaque-éclisse (PE) à cheval sur le joint (J) dont on veut maîtriser l'écartement et à la fixer rigidement aux dalles (D) dont les champs limitent ce joint.

La plaque-éclisse (PE) et les dalles sont pourvues de moyens complémentaires d'ancrage (D) obtenus par déformation lors du vissage de fixation de languettes (L) découpées dans ladite plaque, et ancrées dans une cavité (C) correspondante prévue au moulage des dalles.

# MOYENS ET PROCEDE ANTIFISSURATION DU PAREMENT D'UNE MAISON INDUSTRIALISEE.

L'invention se rapporte à des moyens et un procédé tendant à s'opposer à l'ouverture des joints entre dalles de parements fixées aux poteaux de l'ossature porteuse d'une maison industrialisée.

Ces moyens ont pour fonction de s'opposer aux déplacements relatifs desdites dalles, déplacements dûs au retrait et aux cycles de déformation liés aux variations de température.

Accessoirement, ces moyens, en rendant solidaires d'une part le parement ainsi constitué et d'autre part l'ossature, permettent de prendre en compte celui-ci dans le calcul de contreventement des façades.

Les moyens selon l'invention résident à placer une plaque-éclisse à cheval sur le joint dont on veut maîtriser l'écartement et à la fixer rigidement aux dalles dont les chants limitent ce joint.

L'invention porte plus particulièrement sur les moyens mis en œuvre pour éviter tout déplacement de la plaque-éclisse par rapport aux dalles, normalement autorisé par les jeux traditionnels tolérés dans le bâtiment.

Il est bien évident qu'un simple boulonnage de la plaque-éclisse sur les dalles n'est pas suffisant pour obtenir une immobilisation effective, ne serait-ce que par le fait que les trous de perçage sont d'un diamètre sensiblement supérieur au diamètre de la tige des boulons correspondants.

Pour remédier à cet inconvénient, l'invention se propose de pourvoir la plaque-éclisse et les dalles de moyens complémentaires d'ancrage, tels qu'une saillie de l'un s'enfonce sans jeu dans une cavité de l'autre.

Pour obtenir cet emmanchement sans jeu, il est préconisé de conformer à la demande la "saillie" en fonction de la cavité correspondante.

Pour obtenir ce résultat, on a choisi d'axer la saillie sur le trou de passage du boulon de fixation et

0115730

percé dans ladite plaque, d'étoiler ce trou par des fentes radiales formant ainsi une zone de moindre résistance déformable, et de situer la cavité de la dalle concentriquement à la douille-écrou coopérant avec ledit boulon.

Ainsi, lorsque l'on visse celui-ci dans cette douille-écrou, la plaque-éclisse se déforme et le "bossage" qui se constitue, s'incruste sans jeu dans la cavité puisque celle-ci sert de matrice à la déformation de cette plaque.

Pour faciliter cettesorte d'emboutissage, on interpose une rondelle entre la tête du boulon (ou une pièce intermédiaire) et la plaque.

Avantageusement, les boulons de fixation de l'éclisse sur les dalles servent aussi à la fixation des dalles sur les poteaux d'ossature.

Dans ce cas cette rondelle faisant fonction de poinçon est placée entre la plaque-éclisse et la patte traditionnelle disposée sous la tête du boulon.

D'autres particularités et avantages apparaîtront à la lecture de la description et des revendications qui suivent, lesquelles sont faites en regard des dessins sur lesquels :

- *la figure 1* est une vue en perspective éclatée des éléments nécessaires à l'un des modes de réalisation de l'invention, avant serrage des boulons ; et

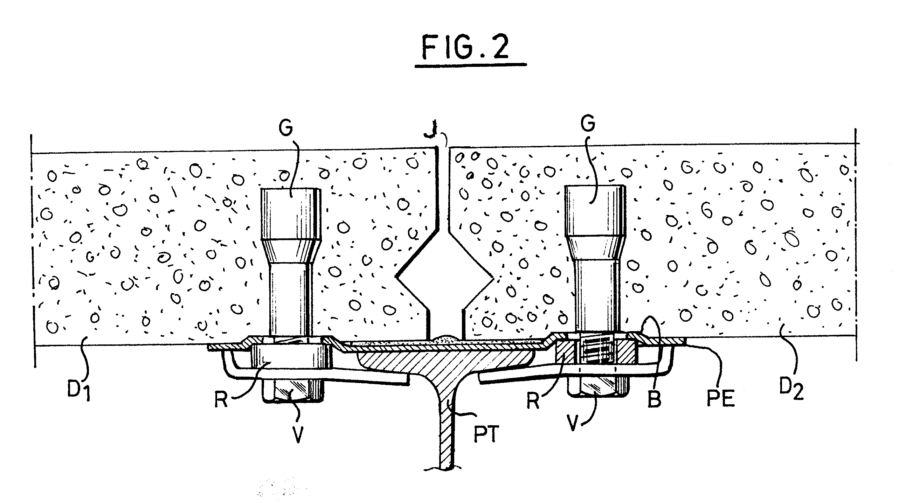

- *la figure 2*, une vue en coupe-plan des mêmes éléments après serrage.

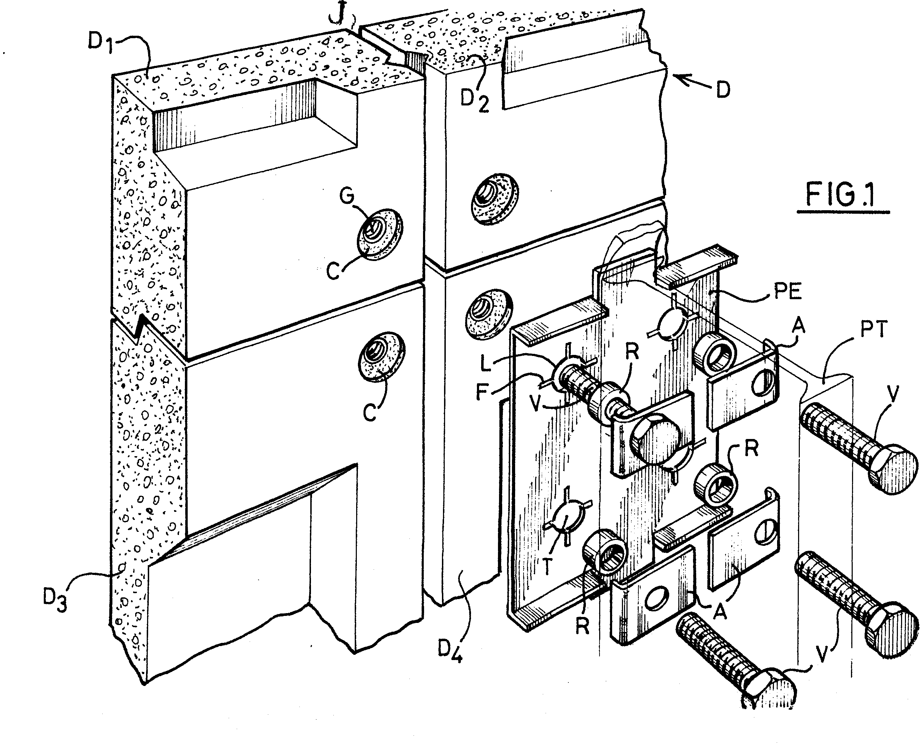

Comme on le voit sur la figure 1, chaque dalle D (ici D1-D2-D3-D4) comporte à proximité de ses champs une cavité C venue de moulage et concentrique à la bague G placée en insert et servant d'écrou au boulon V.

Par ailleurs, on prépare une plaque-éclisse PE comportant au moins deux trous T pourvus de fentes radiales F disposées en étoile et formant entre elles des languettes L.

    - On met en place les dalles de manière à ce que leur jointure J se trouve dans l'axe vertical du poteau PT de l'ossature.

    - D'une manière classique, on introduit les boulons V dans les trous des pattes de fixation A traditionnelles de manière que ces pattes appliquent sur les ailes de ce poteau.

    - On place la plaque-éclisse PE entre les dalles D et le poteau, et la rondelle R entre PE et PT.

    - On visse les boulons V dans les douilles-écrous G.

    Il est facile de comprendre que lors du serrage de ces boulons dans ces douilles-écrous, la rondelle R à la manière d'un poinçon, va enfoncer la partie étoilée adjacente au trou T, de la plaque-éclisse PE, poussant les lamelles L limitées par deux fentes F consécutives à l'intérieur de la cavité C de la dalle D correspondante.

    Cette cavité servant de matrice pour l'emboutissage des lamelles L, il ne peut exister aucun jeu entre celles-ci et la cavité dans laquelle elles pénètrent.

    Il est à noter que la rondelle R lorsqu'elle a accompli sa fonction de poinçon, sert alors d'entretoise pour éviter l'écrasement de la patte A en fin de serrage.

    De cette manière, est réalisé un ancrage fiable entre une plaque-éclisse PE et les deux dalles contiguës formant la jointure J sur laquelle ladite plaque-éclisse est à cheval.

    Bien entendu, la même plaque-éclisse peut être placée à l'intersection d'une jointure verticale et d'une jointure horizontale et ainsi affecter quatre dalles D1-D2-D3-D4 comme visible à la figure 1.

    Il serait concevable que l'on dissocie les deux fonctions des boulons V :

0115730

- 4 -
- fixation de la plaque-éclisse sur les dalles ;
- fixation des dalles sur les poteaux.

0115730

## REVENDICATIONS

1.- Moyens s'opposant à l'ouverture des joints (J) formés par les champs adjacents de dalles (D) de parement placées et fixées devant un poteau (PT) d'une ossature porteuse d'une maison industrialisée, *caractérisés* en ce qu'une plaque-éclisse (PE) est ancrée à au moins deux dalles, étant à cheval sur leur joint (J) commun, cette plaque-éclisse et ces dalles étant pourvues de moyens complémentaires d'ancrage (C et L) s'opposant à tout déplacement indépendant desdites dalles, ces moyens d'ancrage étant du type dans lequel, une saillie de l'une des parties, s'incruste sans jeu dans l'autre partie.

2.- Moyens selon la revendication 1, *caractérisés* en ce que ces moyens complémentaires sont d'une part, une cavité (C) venue de moulage dans la face postérieure de la dalle (D) et d'autre part, un bossage (B) obtenu par déformation de la plaque-éclisse (PE).

3.- Moyens selon la revendication 2, *caractérisés* en ce que ce bossage (B) est obtenu par déformation de languettes (L) formées par des fentes radiales (F) de la plaque-éclisse (PE).

4.- Procédé de mise en œuvre des moyens selon l'une des revendications précédentes, *caractérisé* en ce que, d'une part on moule des dalles (D) en ménageant une cavité (C) concentrique à la douille-écrou (G) placée en insert dans la masse de béton de la dalle, et, d'autre part on prépare une plaque-éclisse (PE) en perçant au moins deux trous (T) de passage des boulons (V) et en pratiquant une pluralité de fentes radiales délimitant des languettes (L) déformables, et qu'ensuite après avoir placé ladite plaque-éclisse à cheval sur le joint (J) formé par les champs adjacents de deux dalles (D1-D2) de manière que les trous (T) de la plaque correspondent aux douilles-écrous (G) de ces deux dalles, on visse deux boulons(V) en interposant entre leur tête (ou une pièce

- 6 -

intermédiaire) et la plaque-éclisse (PE), une rondelle
telle que celle-ci à la manière d'un poinçon écarte les
languettes (L) et les ancre dans la cavite (C) qui sert
de matrice à cet emboutissage.

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-2 066 006 (KELLOGG) <br> * Page 1, colonne 1, ligne 27 - colonne 2, ligne 17 * <br> --- | 1,2,4 | E 04 F 13/08 |
| A | CH-A- 389 214 (GARTNER) <br> * Page 2, lignes 58-80; page 3, lignes 52-107; page 4, lignes 35-75; figures * <br> ----- | 1,4 | |

DOMAINES TECHNIQUES RECHERCHES (Int. Cl. 3)

E 04 F

Le présent rapport de recherche a été établi pour toutes les revendications

| Lieu de la recherche | Date d'achèvement de la recherche | Examinateur |
|---|---|---|
| LA HAYE | 03-04-1984 | PERROTTA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82

BAD ORIGINAL